# EUROPÄISCHE PATENTSCHRIFT

(11) **EP 1 726 502 B1**
(45) Veröffentlichungstag und Bekanntmachung des Hinweises auf die Patenterteilung: **01.07.2009**
(21) Anmeldenummer: 06113144.7
(22) Anmeldetag: 26.04.2006
(51) Int. Cl.: B60W 40/10, B60W 10/04

(54) **Verfahren zur Bestimmung einer Größe bei einem Kraftfahrzeug**
Method for determining a value in a motor vehicle
Procédé de détermination d'une grandeur dans un véhicule automobile

(30) Priorität: 25.05.2005 DE 102005024617
(43) Veröffentlichungstag der Anmeldung: 29.11.2006
(73) Patentinhaber: ROBERT BOSCH GMBH, 70442 Stuttgart (DE)
(72) Erfinder: Hellmann, Manfred, 71706 Hardthof (DE); Dorenkamp, Stephan, 71640 Ludwigsburg (DE)

(56) Entgegenhaltungen:
- EP-A- 1 092 894
- EP-A1- 0 695 930
- WO-A-03/062010
- FR-A- 2 811 397
- US-A- 5 575 737
- US-A1- 2003 220 171

## Beschreibung

Die Erfindung betrifft ein Verfahren und eine Vorrichtung zur Bestimmung einer Größe bei einem Kraftfahrzeug mit einem Motor, einem Handschaltgetriebe, einer Kupplung und Rädern, wobei die Größe die Drehzahlübersetzung zwischen dem Motor und den Rädern repräsentiert,

Die EP-A1-0 695 930, als nächstliegender Stand der Technick bekachtet, beschreibt ein System und ein entsprechendes Verfahren zur Bestimmung eines für das Bruttogesamtgewicht (GCW) kennzeichnenden Wertes bei Kraftfahrzeugen, die mit elektronischen Datenleitungen und handgeschalteten Getriebesystemen ausgerüstet sind. Dazu werden unter anderem Datensignale verwendet, die auf den Datenleitungen liegen. Die Datensignale zeigen unter anderem den Zustand der Kupplung, die Eingangswellendrehzahl, die Ausgangswellendrehzahl, die Getriebeübersetzung und Drehmomente an. Diese Werte dienen dazu, das Bruttogesamtgewicht (GCW) zu bestimmen.

Die US 2003/220171 A1 beschreibt ein Verfahren sowie eine Vorrichtung zur Erkennung des Kupplungszustandes in einem Kraftfahrzeug, insbesondere während einer Motorschleppmomentenregelung. Durch einen Vergleich einer berechneten Gesamtübersetzung mit Schwellenwerten des jeweiligen Gangs ist der Kupplungszustand erkennbar.

Die US-A-5 575 737 beschreibt ein Verfahren und eine Steuereinrichtung zur Steuerung des Antriebsstrangs eines Arbeitsfahrzeuges, welches eine Antriebsmaschine mit Einspritzmengenregelung und ein stufenlos verstellbares Getriebe (IVT) enthält. Der Motor soll sich in Abhängigkeit vom Hauptfahrantrieb und gegebenenfalls von Sekundärantrieben für hydrostatische Pumpen, mechanische Zapfwellenantriebe und dergleichen hinsichtlich Produktivität, Kraftstoffeinsparung und Emissionsverhalten ohne zusätzlichen Aufwand für den Fahrer in einem günstigsten Arbeitsfeld betreiben lassen.

Die EP-A-1 092 894 beschreibt eine Anfahrtssteuerung für ein servounterstütztes, manuell geschaltetes Splitter-Verbundgetriebe. Die Kupplungsbremse kann als eine Hochschaltbremse missbraucht werden. Das kann eine Beschädigung an der Kupplungsbremse zur Folge haben. Das Schalten soll verbessert werden.

Die WO 03/062010 A beschreibt eine Einrichtung und ein Verfahren zum Steuern einer Antriebsaggregatgruppe für ein Kraftfahrzeug. Probleme für ein endlos verstellbares Getriebe (IVT-Getriebe), dass eine spezielle Art eines kontinuierlichen verstellbaren Getriebes (CVT-Getriebe) darstellt, werden gelöst. Insbesondere soll ein sicheres und angenehmes Fahren mit Kraftfahrzeugen ermöglicht sein, die mit diesen Getrieben ausgestattet sind.

Die FR-A-2 811397 beschreibt ein Verfahren zum Betreiben eines Antriebsstrangs eines Kraftfahrzeuges, in dem einem Motor über einen Drehmomentwandler ein Stufengetriebe nachgeschaltet ist. Es wird ein Verfahren angegeben, mit dem in besonders einfacher Weise und mit geringem Aufwand eine Berücksichtigung des Übersetzungsverhältnisses des Stufengetriebes bei der Motorsteuerung ermöglicht ist.

Aus Bosch, Adaptive Fahrgeschwindigkeitsregelung, ISBN 3-7782-2034-9 ist bekannt, dass die Adaptive Fahrgeschwindigkeitsregelung die Geschwindigkeitsregelung für Kraftfahrzeuge in der Art erweitert, dass die Fahrzeuggeschwindigkeit eines Kraftfahrzeugs an ein langsameres vorausfahrendes Fahrzeug anpassbar ist. Dazu wird das vorausfahrende Kraftfahrzeug von einem Abstandssensor erfasst und überprüft, ob es sich im voraussichtlichen Kursbereich befindet. Die englische Übersetzung der Adaptiven Fahrgeschwindigkeitsregelung lautet adaptive cruise control, abgekürzt: ACC. Die Adaptive Fahrgeschwindigkeitsregelung ist mittlerweile auch für Fahrzeuge mit Handschaltgetriebe verfügbar. Für verfügbare Gangstufen sind die Übersetzungsverhältnisse zwischen Motor und angetriebenen Rädern je nach Fahrzeugtyp bestimmt und in einem Speicher abgelegt. Die Übersetzungsverhältnisse werden auch als Strangverstärkung bezeichnet. Vor Aufnahme eines ACC Betriebes ist zu überprüfen, ob eine Gangstufe eingelegt ist. Dazu werden die Drehzahlen der angetriebenen Räder und die Motordrehzahl gemessen, das aktuelle Übersetzungsverhältnis bestimmt und mit Werten aus dem Speicher verglichen. Weicht der Wert nicht oder nur geringfügig von einem der gespeicherten Werte ab, so wird auf eine zulässig eingelegte Gangstufe erkannt. Bei größeren Abweichungen oder bei Überschreiten einer oberen Schwelle, wird die ACC-Regelung beendet. Damit ist verhindert, dass ACC bei Unterbrechung der Kraftschlüssigkeit Motormoment anfordert, was in diesem Fall zu unkomfortabel hohen Motordrehzahlen führen würde. Je nach Fahrzeugtyp sind unterschiedliche Werte in den Speicher einzugeben. Diese Eingabe erfolgt während der Montage der Fahrzeuge und ist aufwändig.

Der Erfindung liegt von daher die Aufgabe zugrunde, die Eingabe zu vereinfachen und eine einfache Vorrichtung dazu anzugeben.

Diese Aufgabe wird durch die Merkmale der unabhängigen Ansprüche gelöst. Das Verfahren weist folgende Verfahrenschritte auf: Erfassen eines die Drehgeschwindigkeit wenigstens eines Rades repräsentierenden ersten Drehzahlwertes, Erfassen eines die Drehgeschwindigkeit des Motors repräsentierenden zweiten Drehzahlwertes, Erfassen eines einen Kupplungszustand repräsentierenden Wertes, Erfassen eines ein Motormoment repräsentierenden Wertes, Bestimmung der Größe in Abhängigkeit von den erfassten Drehzahlwerten dann, wenn der den Kupplungszustand repräsentierende Wert den eingekuppelten Zustand und der das Motormoment repräsentierende Wert ein positives Motormoment anzeigt. Zunächst werden erste und zweite Drehzahlwerte erfasst, die die Drehgeschwindigkeit wenigstens eines Rades und die Drehgeschwindigkeit des Motors repräsentieren. Danach wird die Größe, auch als Übersetzungsverhältnis bezeichnet, in Abhängigkeit von den erfassten Drehzahlwerten bestimmt. Das Übersetzungsverhältnis wird mit während des eingekuppelten Zustands erfassten Drehzahlen bestimmt. Die Bestimmung der Größe erfolgt automatisch und ist ein selbstlernendes Verfahren, mittels dessen die Übersetzungsverhältnisse des Gesamt-Triebstanges bei Fahrzeugen mit Handschaltgetriebe für alle Gangstufen bestimmbar und in einem nichtflüchtigen Speicher ablegbar sind. Es entfällt eine fahrzeugtypabhängige Applikation der einzelnen Getriebeübersetzungen. Um zu verhindern, dass falsche Gangstufen, zum Beispiel bei leichter Bergabfahrt ohne eingelegten Gang, erkannt werden, wird das Übersetzungsverhältnis nur im eingekuppelten Zustand und einem deutlich positiven Motorkupplungsmoment durchgeführt. Das Motorkupplungsmoment ist das Motormoment, das am Ausgang des Motors und am Eingang des Getriebes beziehungsweise der Kupplung ansteht. Positives Motorkupplungsmoment steht für eine Beschleunigungsphase des Kraftfahrzeuges. In diesem Fall kann eine Kraftschlussunterbrechung ausgeschlossen werden, wenn die Motordrehzahl sich proportional zur Fahrzeuggeschwindigkeit verhält.

In vorteilhafter Weise wird die Größe in Abhängigkeit von den erfassten Drehzahlwerten dann bestimmt, wenn wenigstens einer der erfassten Drehzahlwerte vorgebbare Schwellwerte über- und unterschreitet, also in einem zulässigen Bereich liegt. Damit sind niedrige und hohe Motordrehzahlen bei der Erkennung ausgeschlossen und die Größe wird nicht verfälscht.

Die Übersetzungsverhältnisse der einzelnen Gangstufen können in vorteilhafter Weise wie folgt ermittelt werden: Nach der Produktion des Fahrzeugs findet in der Regel eine Überprüfungsfahrt statt. Während dieser Überprüfungsfahrt kann der Testfahrer angehalten werden, alle Gangstufen durchzuschalten, so dass alle Gangstufen vor Auslieferung an den Endkunden gelernt werden können, und damit für die ACC-Regelung zu Verfügung stehen. Durch eine Bestätigungsmeldung zum Beispiel in Form eines Lampensignals oder akustischen Signals, hierzu können auch die vorhandenen ACC-Infogeber genutzt werden, wird dem Testfahrer angezeigt, dass alle notwenigen Gangstufen erkannt wurden. Eine weitere Form der Bestätigung kann darin bestehen, dass sich ACC erst aktivieren lässt, wenn alle notwendigen Gangstufen gelernt wurden. Damit kann sichergestellt werden, dass ACC, oder auch andere Funktionen, die die Getriebeübersetzungen nutzen, im voll funktonfähigen Zustand an den Endverbraucher ausgeliefert wird. Das beschriebene Verfahren ist nicht auf ACC beschränkt, sondern generell für Funktionen anwendbar, die die Getriebe-Übersetzungsverhältnisse beziehungsweise Strangverstärkungen nutzen. Dieses Verfahren ist in vorteilhafter Weise im Rahmen weiterer Ausführungsformen einer Fahrgeschwindigkeitssteuerung, zum Beispiel eines herkömmlichen Fahrgeschwindigkeitsreglers, einsetzbar.

Zum besseren Verständnis der Erfindung wird nachstehend ein Ausführungsbeispiel anhand der Zeichnung näher erläutert.

Es zeigt
Fig. lein Blockschaltbild einer Vorrichtung zur Bestimmung einer Strangverstärkung bei einem Kraftfahrzeug.

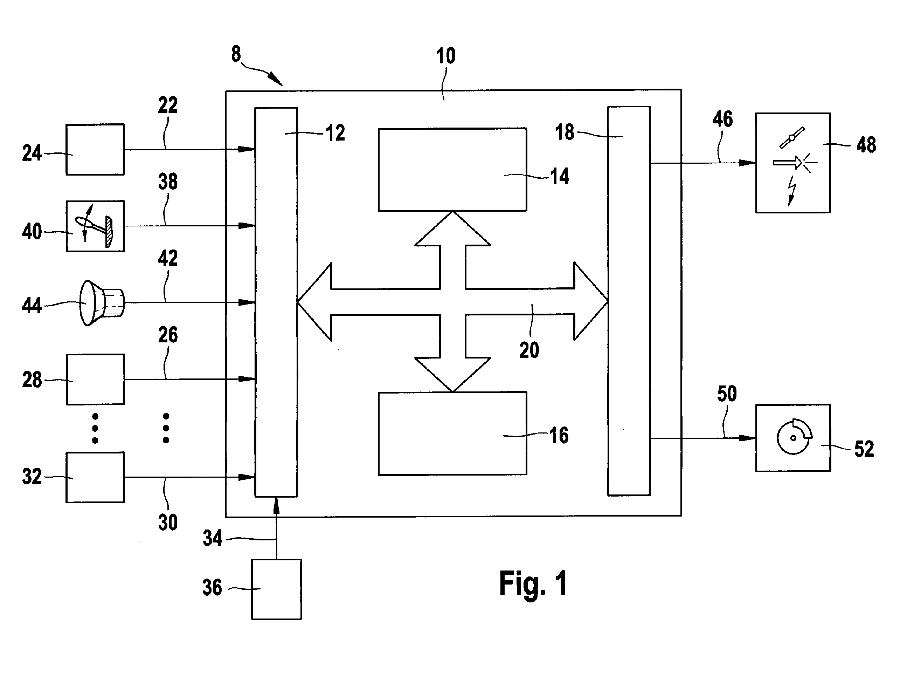

Figur 1 zeigt eine Vorrichtung 8 zur Bestimmung einer Strangverstärkung mit einer Steuereinheit 10 für einen adaptiven Fahrgeschwindigkeitsregler. Die Steuereinheit 10 umfasst eine Eingangsschaltung 12, wenigstens einen Mikrocomputer 14, einen Speicher 16 und eine Ausgangsschaltung 18. Diese Elemente sind über ein Kommunikationssystem 20 zum Daten- und Informationsaustausch miteinander verbunden. Die Vorrichtung weist des Weiteren Eingangsleitungen 22, 26, 30, 34, 38 und 42, einen Raddrehzahlsenor 24, einen Motordrehzahlsenor 28, einen Kupplungsschalter 32, eine Motormomenterfassungsschaltung 36, ein Bedienelement 40, eine Abstandsmesseinrichtung 44, Ausgangsleitungen 46 und 50, eine Stelleinrichtung 48 und ein Stellelement 52 auf. Der Eingangsschaltung 12 sind die Eingangsleitung 22 von dem Raddrehzahlsensor 24 zur Erfassung der Raddrehzahl, die Eingangsleitung 26 von dem Drehzahlsensor 28 zur Erfassung der Motordrehzahl, die Eingangsleitung 30 von dem Schalter 32 zur Erfassung des Kupplungszustandes und die Leitung 34 von der Schaltung 36 zur Erfassung des Motormomentes zugeführt. Des Weiteren sind der Eingangsschaltung 12 die Leitung 38 von wenigstens einem vom Fahrer betätigbaren Bedienelement 40 zur Vorgabe des Betriebszustandes des Fahrgeschwindigkeitsreglers und des Sollabstandes und die Eingangsleitung 42 von der Abstandsmesseinrichtung 44, vorzugsweise einem Radargerät, zugeführt. Der Mikrocomputer 14 bestimmt aus den von den Sensoren gelieferten Drehzahlwerten die Übersetzungsverhältnisse. Die Werte für die Übersetzungsverhältnisse werden in einem nichtflüchtigen Teil des Speichers 16 abgelegt. Ein solcher Speicherteil kann als EEPROM ausgeführt sein. EEPROM steht für den englischen Ausdruck electrically erasable programmable read only memory. Die Steuereinheit 10, dort der wenigstens eine Mikrocomputer 14, beeinflusst im Rahmen der adaptiven Fahrgeschwindigkeitsregelung über wenigstens eine Ausgangsleitung 46 und entsprechende Stelleinrlchtungen 48, auch als elektronisches Motorsteuergerät bezeichnet, die Leistung der Antriebseinheit des Fahrzeugs. Ferner beeinflusst die Steuereinheit 10 über die Ausgangsleitung 50 und entsprechenden Stellelementen 52, auch als Bremseinrichtung mit Elementen eines Antiblockiersystems und Antriebsschlupfsystems bezeichnet, die Bremskraft an den Radbremsen des Fahrzeugs.

## Patentansprüche

1. Verfahren zur Bestimmung einer Größe bei einem Kraftfahrzeug mit einem Motor, einem Handschaltgetriebe, einer Kupplung und Rädern, wobei die Größe die Drehzahlübersetzung zwischen dem Motor und den Rädern repräsentiert, mit folgenden Schritten:
- Erfassen eines die Drehgeschwindigkeit wenigstens eines Rades repräsentierenden ersten Drehzahlwertes,
- Erfassen eines die Drehgeschwindigkeit des Motors repräsentierenden zweiten Drehzahlwertes,
- Erfassen eines einen Kupplungszustand repräsentierenden Wertes,
- Erfassen eines ein Motormoment repräsentierenden Wertes,
- Bestimmung der Größe in Abhängigkeit von den erfassten Drehzahlwerten dann, wenn der den Kupplungszustand repräsentierende Wert den eingekuppelten Zustand und der das Motormoment repräsentierende Wert ein positives Motormoment anzeigt.

2. Verfahren nach Anspruch 1, **dadurch gekennzeichnet, dass** die Größe in Abhängigkeit von den erfassten Drehzahlwerten dann bestimmt wird, wenn wenigstens eine der erfassten Drehzahlwerte einen vorgebbaren Schwellwert überschreitet.

3. Verfahren nach Anspruch 1, **dadurch gekennzeichnet, dass** die Größe in Abhängigkeit von den erfassten Drehzahlwerten dann bestimmt wird, wenn wenigstens eine der erfassten Drehzahlwerte einen vorgebbaren Schwellwert unterschreitet.

4. Verfahren nach einem der vorhergehenden Ansprüche 1-3, **dadurch gekennzeichnet, dass** nach Bestimmung und Abspeicherung der Größe ein Signal abgebbar ist.

5. Verfahren nach einem der vorhergehenden Ansprüche 1-4, **dadurch gekennzeichnet, dass** nach Bestimmung und Abspeicherung aller möglichen Größen ein zweites Signal abgebbar ist.

6. Verfahren nach einem der vorhergehenden Ansprüche 1-3, **dadurch gekennzeichnet, dass** nach Bestimmung und Abspeicherung aller möglichen Größen eine adaptive Fahrzeuggeschwindigkeitsregelung aktivierbar ist.

7. Vorrichtung (8) zur Bestimmung einer Größe bei einem Kraftfahrzeug mit einem Motor, einem Handschaltgetriebe, einer Kupplung und Rädern, wobei die Größe die Drehzahlübersetzung zwischen dem Motor und den Rädern repräsentiert, mit
- ersten Erfassungsmitteln (24) zur Erfassung eines die Drehgeschwindigkeit wenigstens eines Rades repräsentierenden ersten Drehzahlwertes,
- zweiten Erfassungsmitteln (24) zur Erfassung eines die Drehgeschwindigkeit des Motors repräsentierenden zweiten Drehzahlwertes,
- dritten Erfassungsmitteln (32) zur Erfassung eines einen Kupplungszustand repräsentierenden dritten Wertes,
- vierten Erfassungsmitteln (36) zur Erfassung eines ein Motormoment repräsentierenden Wertes,
- Bestimmungsmittel (14) zur Bestimmung der Größe in Abhängigkeit von den erfassten Drehzahlwerten dann, wenn der den Kupplungszustand repräsentierende Wert den eingekuppelten Zustand und der das Motormoment repräsentierende Wert ein positives Motormoment anzeigt.

## Claims

1. Method for determining a value in a motor vehicle having an engine, a manual shift gearbox, a clutch and wheels, wherein the value represents the transmission of the rotational speed between the engine and the wheels, having the following steps:
- a first rotational speed value which represents the rotational speed of at least one wheel is sensed,
- a second rotational speed value which represents the rotational speed of the engine is sensed,
- a value which represents a state of the clutch is sensed,
- a value which represents an engine torque is sensed,
- the value is determined as a function of the sensed rotational speed values if the value which represents the state of the clutch indicates the engaged state and the value which represents the engine torque indicates a positive engine torque.

2. Method according to Claim 1, **characterized in that** the value is determined as a function of the sensed rotational speed values if at least one of the sensed rotational speed values exceeds a predefinable threshold value.

3. Method according to Claim 1, **characterized in that** the value is determined as a function of the sensed rotational speed values if at least one of the sensed rotational speed values drops below a predefinable threshold value.

4. Method according to one of the preceding Claims 1-3, **characterized in that** a signal can be output after the value has been determined and stored.

5. Method according to one of the preceding Claims 1-4, **characterized in that** a second signal can be output after all the possible values have been determined and stored.

6. Method according to one of the preceding Claims 1-3, **characterized in that** an adaptive vehicle speed control system can be activated after all the possible values have been determined and stored.

7. Device (8) for determining a value in a motor vehicle having an engine, a manual shift gearbox, a clutch and wheels, wherein the value represents the transmission of the rotational speed between the engine and the wheels, having
- first sensing means (24) for sensing a first rotational speed value which represents the rotational speed of at least one wheel,
- second sensing means (24) for sensing a second rotational speed value which represents the rotational speed of the engine,
- third sensing means (32) for sensing a third value which represents a state of the clutch,
- fourth sensing means (36) for sensing a value which represents an engine torque,
- determining means (14) for determining the value as a function of the sensed rotational speed values if the value which represents the state of the clutch indicates the engaged state and the value which represents the engine torque indicates a positive engine torque.

## Revendications

1. Procédé pour déterminer une grandeur dans un véhicule automobile comprenant un moteur, une boîte de vitesses manuelle, un embrayage et des roues, la grandeur représentant le rapport de démultiplication de régime entre le moteur et les roues, comprenant les étapes suivantes :
- détection d'une première valeur de régime représentant la vitesse de rotation d'au moins une roue,
- détection d'une deuxième valeur de régime représentant la vitesse de rotation du moteur,
- détection d'une valeur représentant l'état de l'embrayage,
- détection d'une valeur représentant un couple moteur,
- détermination de la grandeur en fonction des valeurs de régime détectées lorsque la valeur représentant l'état de l'embrayage indique l'état embrayé et que la valeur représentant le couple moteur indique un couple moteur positif.

2. Procédé selon la revendication 1, **caractérisé en ce que** la grandeur est déterminée en fonction des valeurs de régime détectées lorsqu'au moins l'une des valeurs de régime détectées dépasse une valeur seuil prédéfinissable.

3. Procédé selon la revendication 1, **caractérisé en ce que** la grandeur est déterminée en fonction des valeurs de régime détectées lorsqu'au moins l'une des valeurs de régime détectées est en dessous d'une valeur seuil prédéfinissable.

4. Procédé selon l'une quelconque des revendications 1 à 3, **caractérisé en ce qu'**un signal peut être émis après détermination et mémorisation de la grandeur.

5. Procédé selon l'une quelconque des revendications 1 à 4, **caractérisé en ce qu'**un deuxième signal peut être émis après détermination et mémorisation de toutes les grandeurs possibles.

6. Procédé selon l'une quelconque des revendications 1 à 3, **caractérisé en ce qu'**une régulation adaptative de la vitesse du véhicule peut être activée après détermination et mémorisation de toutes les grandeurs possibles.

7. Dispositif (8) pour déterminer une grandeur dans un véhicule automobile comprenant un moteur, une boîte de vitesses manuelle, un embrayage et des roues, la grandeur représentant le rapport de démultiplication de régime entre le moteur et les roues, comprenant :
- des premiers moyens de détection (24) pour détecter une première valeur de régime représentant la vitesse de rotation d'au moins une roue,
- des deuxièmes moyens de détection (24) pour détecter une deuxième valeur de régime représentant la vitesse de rotation du moteur,
- des troisièmes moyens de détection (32) pour détecter une troisième valeur représentant un état de l'embrayage,
- des quatrièmes moyens de détection (36) pour détecter une valeur représentant un couple moteur,
- des moyens de détermination (14) pour déterminer la grandeur en fonction des valeurs de régime détectées, lorsque la valeur représentant l'état de l'embrayage indique l'état embrayé et que la valeur représentant le couple moteur indique un couple moteur positif.
